# EUROPEAN PATENT APPLICATION

(11) **EP 1 167 209 A1**
(43) Date of publication of application: **02.01.2002**
(21) Application number: 01112405.4
(22) Date of filing: 21.05.2001
(51) Int. Cl.: B65B 57/02, B65B 7/28

(54) **Inspection method for cap installation condition**

(30) Priority: 31.05.2000 JP 2000162633
(71) Applicant: Toyo Jidoki Co., Ltd., Tokyo (JP)
(72) Inventor: Hiramoto, Shinichi, Iwakuni-shi, Yamaguchi (JP); Nakamoto, Kakue, Iwakuni-shi, Yamaguchi (JP)
(74) Representative: Patentanwälte Leinweber & Zimmermann

(57) **Abstract**

An inspection method capable of performing an inspection for all items concerning the installation condition of a cap by a single imaging process. A mark is formed on the outer peripheral surface of a cap. A bag fitted with the cap is held with a holding device so as to face an imaging device in a predetermined positional relationship to take a vertical image of the whole cap. The mark and two portions of the cap at bilaterally symmetric positions near right and left side edge portions in the vicinity of the upper end edge of the cap, together with a ring, are defined as inspective object portions. First, second and third inspection gates are set in correspondence to the inspective object portions. Portions of the images of the inspective object portions present within the inspection gates are subjected to image processing to obtain data for judgment. The data for judgment is compared with preset reference values to judge whether the installation condition of the cap is good or not.

## Description

### BACKGROUND OF THE INVENTION

### 1. Field of the Invention

The present invention relates to an inspection method for the installation condition of a cap on a spouted container.

### 2. Discussion of Related Art

Recently, use has been made of spouted bags as packaging bags for soft drinks, for example. After a liquid material, for example, has been filled into the spouted bags, caps are fitted to the bags. Then, the installation condition of the caps on the spouted bags is inspected.

Japanese Patent Application Unexamined Publication (KOKAI) No. Hei 2000-85887 discloses an inspection method for the cap installation condition. The inspection method is carried out as follows. First, a cap fitted on the spout of a packaging bag is inspected to judge whether or not the cap is undesirably tilted. If the condition of the fitted cap is judged to be no good, the defective bag is removed from the line. Then, the cap is tightened, and while doing so, an inspection for the tightening torque is performed. Upon completion of the cap installation and tightening torque inspection, an overrun inspection is performed. Finally, a cap height inspection is performed. Thus, the prior art inspection method for the cap installation condition has many steps to be carried out sequentially. Consequently, the whole structure of the inspection apparatus becomes complicated.

### SUMMARY OF THE INVENTION

The present invention was made in view of the above-described problems associated with the prior art.

An object of the present invention is to provide an inspection method capable of performing an inspection for all items concerning the cap installation condition by a single inspection process.

To attain the above-described object, the present invention provides an inspection method wherein a mark is formed on the outer peripheral surface of a cap to be installed onto a spout. The mark serves as an object of detection. A bag fitted with the cap is held at a predetermined position with respect to an imaging device, and the cap is imaged with the imaging device to obtain a vertical image of the cap. A first inspection gate with a predetermined planar configuration is set at a position where the mark should be present when the cap is normally installed on the spout. A portion of the image of the mark taken by the imaging device that is present within the first inspection gate is subjected to image processing to obtain first data for judgment. The first data for judgment is compared with a preset criterion for judgment to judge whether the installation condition of the cap is good or not.

In one embodiment, two marks are provided at respective positions on the outer peripheral surface of the cap that are of the same height and 180 degrees apart from each other in the circumferential direction.

In another embodiment, the inspection method further includes a pair of second inspection gates of the same configuration provided in correspondence to bilaterally symmetric positions on the cap. The second inspection gates each have a predetermined width in the horizontal direction and extend from a predetermined position below the upper end edge of the cap to a predetermined position above the upper end edge when the cap is normally installed on the spout. A portion of the image in the vicinity of the upper end edge of the cap imaged by the imaging device that is present within each of the second gates is subjected to image processing to obtain second data for judgment. The second data for judgment is compared with a preset second criterion for judgment to judge whether the installation condition of the cap is good or not.

In still another embodiment, the cap has a ring connected to the lower end thereof through disconnectable connecting portions. The ring is engaged with an engagement portion formed on the outer periphery of the spout when the cap is normally installed on the spout to prevent the ring from becoming dislodged. The inspection method further includes a third inspection gate provided in correspondence to the ring. The third inspection gate is set so that a portion of the image of the ring taken by the imaging device that is present within the third inspection gate changes in configuration if the ring moves relative to the cap in a state where the cap has been installed on the spout. The portion of the image within the third inspection gate is subjected to image processing to obtain third data for judgment. The third data for judgment is compared with a preset third criterion for judgment to judge whether the installation condition of the cap is good or not.

In a further embodiment, the inspection method uses a single imaging device.

In an inspection method according to a still further embodiment, inspection gates of predetermined dimensions are set in a single vertical plane in correspondence to a plurality of preset inspective object portions of a cap, respectively. A bag fitted with the cap is held at a predetermined position with respect to an imaging device, and the cap is imaged with the imaging device to obtain a vertical image of the cap. The images of the inspective object portions that are present within the inspection gates are subjected to image processing to obtain data for judgment. The data for judgment is compared with preset criteria for judgment to judge whether the installation condition of the cap is good or not.

Other objects and advantages of the present invention will become apparent from the following detailed description of illustrated embodiments of the invention.

### BRIEF DESCRIPTION OF THE DRAWINGS

Figs. 1a to 1c are diagrams showing the relationship between a spouted packaging bag, a cap and inspection gates, of which: Fig. 1a is a front view of the packaging bag; Fig. 1b is an enlarged front view showing the relationship between the cap installed on the spout and the inspection gates; and Fig. 1c is a sectional view taken along the line C-C in Fig. 1b.

Fig. 2 is a perspective view schematically showing the arrangement of a bag filling and packaging machine in which the inspection method according to the present invention may be carried out.

Figs. 3a to 3f are elevations showing the operation of a cap delivery apparatus at various steps.

Fig. 4 is a block diagram showing the arrangement of a cap installation condition inspection apparatus.

Fig. 5 is a fragmentary enlarged view showing the mouth portion of a spout.

Fig. 6 is a flowchart of a cap installation condition inspection process performed by the inspection apparatus shown in Fig. 4.

Fig. 7 is a diagram showing the relationship between a cap and an inspection gate in a second embodiment of the present invention.

### DETAILED DESCRIPTION OF THE PREFERRED EMBODIMENTS

Specific embodiments of the present invention will be described below with reference to the accompanying drawings. It should be noted, however, that the scope of the present invention is not limited to the embodiments stated below.

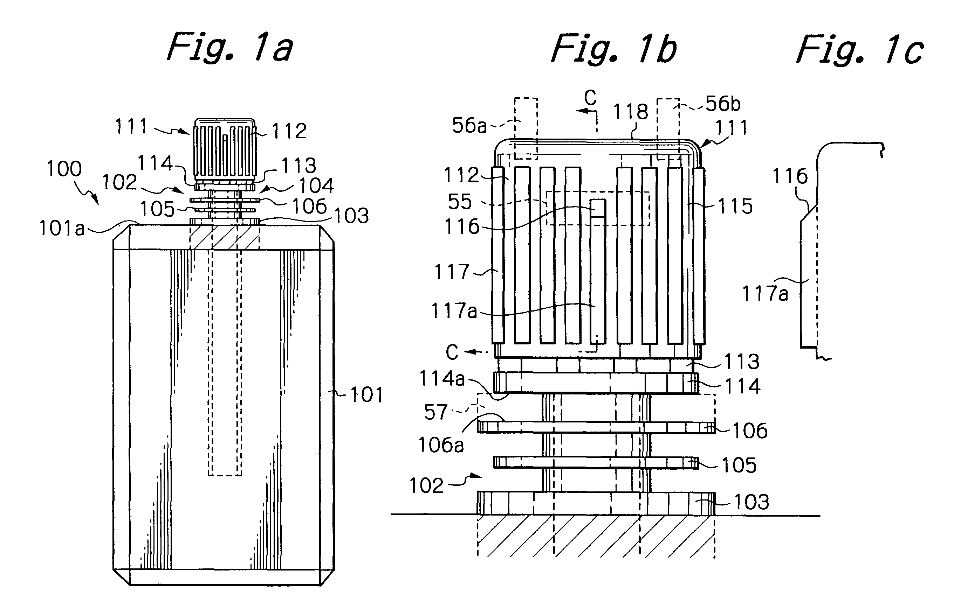

Figs. 1a to 1c are diagrams showing an example of a spouted packaging bag 100. Fig. 1a is a front view of the packaging bag 100. Fig. 1b is a fragmentary enlarged front view for describing inspection gates (described later). Fig. 1c is a sectional view taken along the line C-C in Fig. 1b. The packaging bag 100 shown in Fig. 1a is a conventional spouted packaging bag, which is publicly known. The packaging bag 100 consists essentially of a bag body 101 having a certain degree of rigidity and a spout 102 fitted to the bag body 101. The spout 102 is thermowelded to an upper edge portion 101a of the bag body 101 that is open from the beginning. By the thermowelding process, the upper edge portion 101a of the bag body 101 is sealed over the entire length thereof. The spout 102 has an generally cylindrical configuration. The spout 102 is positioned with respect to the bag body 101 by using a positioning flange 103 and fitted to the bag body 101 in this state. The spout 102 has a mouth portion 104 at the top thereof. The mouth portion 104 has an intermediate flange 105 and an upper flange 106 with a predetermined space therebetween. External threads are cut on the outer periphery of a portion of the spout 102 above the upper flange 106. A cap 111 is fitted onto the externally threaded portion after a material to be packed has been filled into the bag 100.

The cap 111 has a cap body 112, the upper end of which is closed. A ring 114 is connected to the cap body 112 through a plurality of circumferentially spaced disconnectable connecting portions 113. The ring 114 is engaged with an engagement portion formed on the spout 102 when the cap 111 is installed on the spout 102 to prevent the ring 114 from becoming dislodged. This arrangement is publicly known. Therefore, a detailed description thereof is omitted. A portion of the spout 102 below the positioning flange 103 is inserted into the bag body 101. The bag 100 is supported, for example, with a holding member inserted into the space between the intermediate flange 105 and the upper flange 106. In this state, the bag 100 is moved through various steps successively in a bag filling and packaging machine (described later). The holding member is also publicly known. Therefore, a detailed description thereof is omitted.

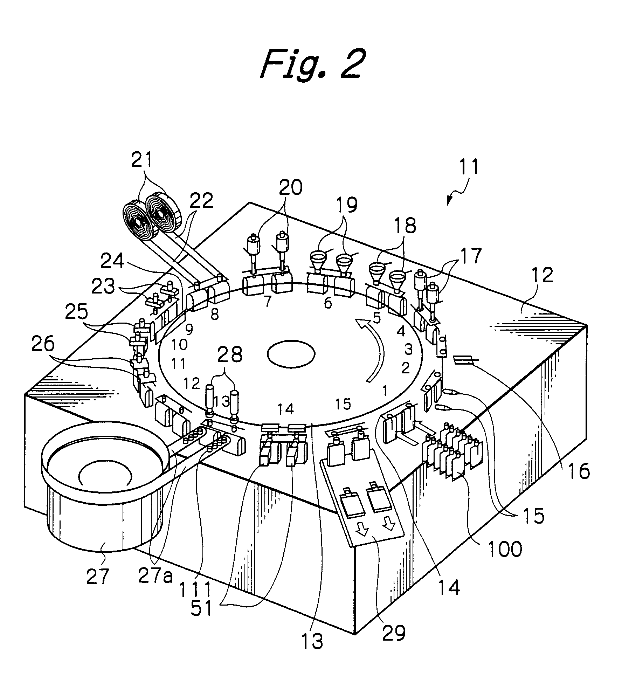

Fig. 2 is a perspective view schematically showing the arrangement of a bag filling and packaging machine for performing a bag filling and packaging operation using the above-described packaging bag 100, in which the present invention is carried out. A packaging machine 11 has a rotary table 13 provided on a base 12 (the rotary table 13 being shown schematically by a circle in the figure). The rotary table 13 is intermittently rotatable. A plurality of bag holders are provided on the rotary table 13 at predetermined spaces in the circumferential direction. The bag holders have bag holding members 14 for holding packaging bags 100.

The packaging bags 100 held by the bag holding members 14 move successively through various steps (shown by the numerals on the rotary table 13) as the rotary table 13 rotates. More specifically, at step 1, spouted packaging bags 100 are supplied to each bag holding member 14 from a bag feeder (not shown in the figure because it is publicly known). In this embodiment, the bag filling and packaging operation is carried out in units of two packaging bags 100. That is, the bag holding members 14 each have two bag holding portions which are simultaneously supplied with two bags 100, respectively, from the bag feeder. At step 2, it is confirmed with detectors 15 using optical sensors that the packaging bags 100 are held by the bag holding member 14. At step 3, each packaging bag 100 is printed with the date of manufacture, etc. by a printer 16 comprising an ink-jet printer. At step 4, a predetermined amount of liquid material is filled into each packaging bag 100 by using a liquid filling nozzle 17 connected to a storage tank (not shown). As the above-described components, publicly known devices are usable.

At step 5, the mouth portion 104 of the spout 102 of each packaging bag 100 is cleaned by spraying a cleaning liquid and air thereon using a spout mouth cleaning device 18. At step 6, the mouth portion 104 cleaned at step 5 is dried by blowing air thereon using a spout mouth drying device 19. The cleaning and drying steps are not directly related to the present invention. Therefore, a detailed description thereof is omitted. At step 7, the air in each bag 100 is replaced with nitrogen gas, for example, by using a gas flush nozzle 20. The reason for carrying out the gas replacement is as follows. In the present invention, the bag 100 is deaerated at a subsequent step as stated later. However, it cannot always be expected that the bag 100 will be completely deaerated. Therefore, a gas that may remain slightly in the bag 100 is predetermined to be an inert gas, e.g. nitrogen, but not air, thereby eliminating adverse effects on the material packed in the bag 100.

At step 8, a tape feeder having a tape reel 21 supplies a tape 22 formed from aluminum foil or a thin synthetic resin film. A seal (not shown) for inner seal is blanked from the tape 22 and tacked to the upper end surface of the spout mouth portion 104 by partially welding the seal thereto. Step 9 is a primary sealing step at which the seal is welded to the upper end surface of the spout mouth portion 104 with a hot plate 23 to seal the spout mouth portion 104. At this step, prior to the sealing process, the bag 100 is deaerated by using a pair of press plates 24. Step 10 is a secondary sealing step carried out by using a hot plate 25. Step 11 is a cooling step at which the sealed portion of the spout 102 is cooled by using a cooling plate 26.

Step 12 is an inner seal inspection step at which a judgment is made as to whether or not the inner seal has properly been effected. Step 13 is a cap fitting step at which a cap 111 is supplied to a cap tightening device 28 from a cap feeder 27 equipped with a feeder rail 27a. The cap 111 is fitted on the spout mouth portion 104 and tightened, thereby installing the cap 111 onto the spout 102. At this time, the cap 111 is delivered from the feeder 27 to the tightening device 28 by a cap delivery apparatus 31 (not shown in Fig. 2 with a view to avoiding complication of the illustration). At step 14, the cap installation condition is inspected by a cap installation condition inspection apparatus 51. At step 15, the bag 100 is discharged onto a discharge conveyor 29. The delivery apparatus 31 and the inspection apparatus 51 will be described below in detail.

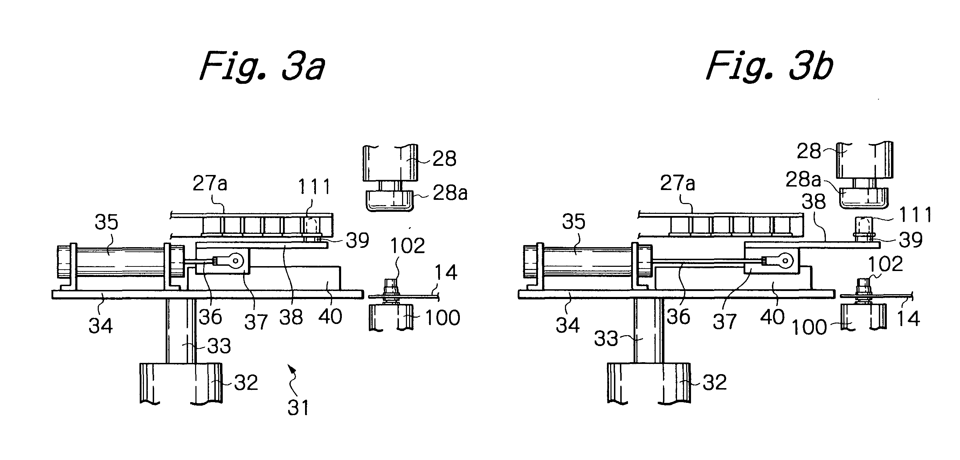

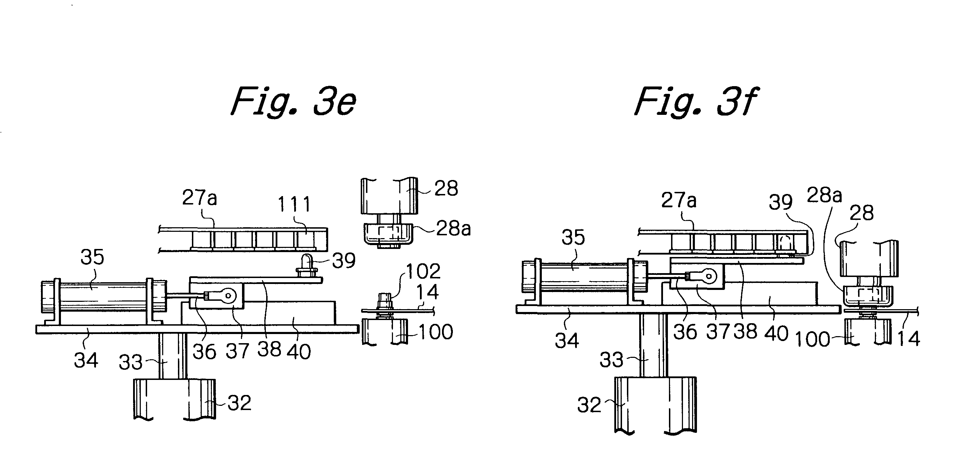

Next, the cap delivery apparatus 31 will be described with reference to Figs. 3a to 3f. Fig. 3a shows the delivery apparatus 31 in a state where a cap feed pin 39 is located in the top cap 111 of those on the feeder rail 27a of the feeder 27. The delivery apparatus 31 has a guide post 32 for vertically movably supporting an elevating shaft 33. A support plate 34 is horizontally secured to the upper end of the elevating shaft 33. An air cylinder 35 is mounted and fixed on the support plate 34. A slider 37 is connected to a rod 36 of the air cylinder 35. An arm 38 is secured to the slider 37 to extend in the same direction as the direction of extension of the rod 36. A cap feed pin 39 is stood on the upper side of the distal end of the arm 38. The pin 39 has a hemispherical upper end. A slide rail 40 is provided so that the slider 37 slides thereon when moving in the horizontal direction in the figure. In a standby state, the elevating shaft 33 is in a position (see Fig. 3e) lower than the position illustrated in Fig. 3a. The pin 39 is located directly below the top cap 111 of those on the feeder rail 27a. When the elevating shaft 33 moves upward by a predetermined distance, the state shown in Fig. 3a is reached. It should be noted that each cap 111 moves in a state where the ring 114 faces downward and the lower surface of the ring 114 is supported at both sides thereof by the feeder rail 27a.

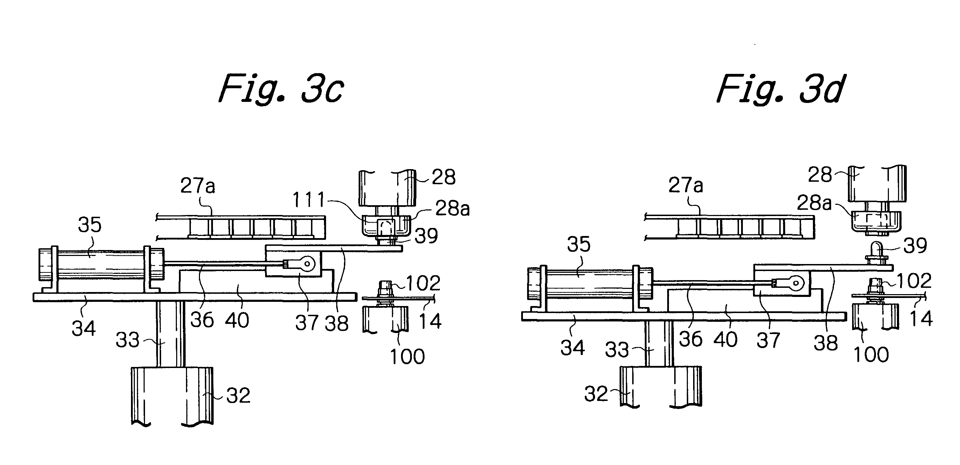

Fig. 3b shows a state where the rod 36 of the air cylinder 35 has extended from the position shown in Fig. 3a. The pin 39 fitted with the cap 111 is positioned directly below a tightening head 28a of the cap tightening device 28. Meanwhile, a bag 100 supported by the bag holding member 14 is positioned directly below the pin 39. Next, as shown in Fig. 3c, the tightening head 28a of the tightening device 28 moves downward by a predetermined distance. Thus, the pin 39 fitted with the cap 111 is positioned in the head 28a of the tightening device 28, which is open. Then, the head 28a is closed to grip the cap 111. Next, as shown in Fig. 3d, the elevating shaft 33 moves downward to return to the previous position in the vertical direction, causing the pin 39 to withdraw from the head 28a with the cap 111 left therein.

Next, as shown in Fig. 3e, the rod 36 of the air cylinder 35 is withdrawn to the previous position. Consequently, the pin 39 is positioned directly below the top cap 111 of those moved forward on the feeder rail 27a by a distance corresponding to one cap 111. Then, as shown in Fig. 3f, the elevating shaft 33 moves upward, causing the pin 39 to fit into the top cap 111. Meanwhile, the head 28a of the tightening device 28 moves downward to put the cap 111 onto the spout mouth portion 104 and tightens the cap 111 by rotating it. In this way, the cap 111 is installed on the spout 102. Upon completion of the capping process, the tightening head 28a moves upward to return to the position shown in Fig. 3a. Meanwhile, the bag 100 fitted with the cap 111 moves to the subsequent step, and a subsequent bag 100 moves to a position directly below the tightening device 28.

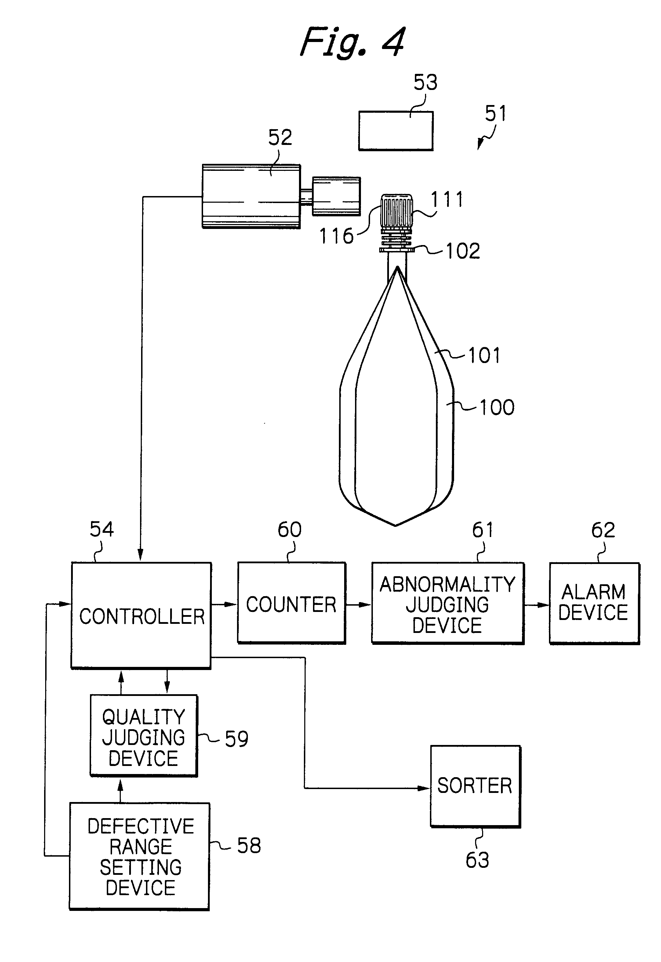

The following is a description of the inspection apparatus 51 used in the cap installation condition inspection performed at the above-described step 14 and the inspection method carried out by using the inspection apparatus 51. Fig. 4 is a block diagram schematically showing the arrangement of the cap installation condition inspection apparatus 51. The inspection apparatus 51 has an imaging device 52 and a light source 53. In this embodiment, the imaging device 52 is a CCD camera, and the light source 53 is a strobe. In front of the camera 52, the bag 100 fitted with the cap 111 at the cap tightening step is vertically suspended by the holding member 14 (not shown in Fig. 4). The positional relationship between the camera 52 and the bag 100 is as follows. With respect to the bag 100 held in the posture shown in Fig. 1a, the camera 52 is installed on this side of the plane of the figure to face the bag 100. The strobe 53 is positioned to illuminate the cap 111 from above. The bag 100 is supported at a predetermined position and in a predetermined posture by the holding member 14, and the camera 52 and the strobe 53 are installed at predetermined positions, respectively. Therefore, the relative positional relationship between the camera 52 and the bag 100 is fixed.

Referring to Figs. 1b and 1c, a mark 116 is formed on the outer peripheral surface 115 of the body 112 of the cap 111 for the packaging bag 100 used in this embodiment. The mark 116 is put at a predetermined position in the height direction to serve as a portion to be imaged by the camera 52. More specifically, vertically elongated ribs or ridges 117 are formed on the outer peripheral surface 115 of the cap body 112 at predetermined intervals in the circumferential direction. Among the ridges 117, a ridge 117a is arranged to be located at an approximately central position on a side of the cap 111 that faces the camera 52 when the cap 111 is fastened to the spout 102 and thus installed at the correct position and in the correct posture. The ridge 117a is shorter than the other ridges 117, and the upper end thereof lies lower than those of the other ridges 117. The mark 116 is formed on the upper end of the ridge 117a. As shown in Fig. 1c, the mark 116 is defined by an upper end portion of the ridge 117a that is formed into a slant surface sloped at an approximately 45 degrees. Thus, the mark 116 reflects light from the strobe 53 installed above it. Consequently, when viewed from the front of the cap 111, the mark 116 appears particularly bright and is therefore extremely easy to distinguish from the surroundings.

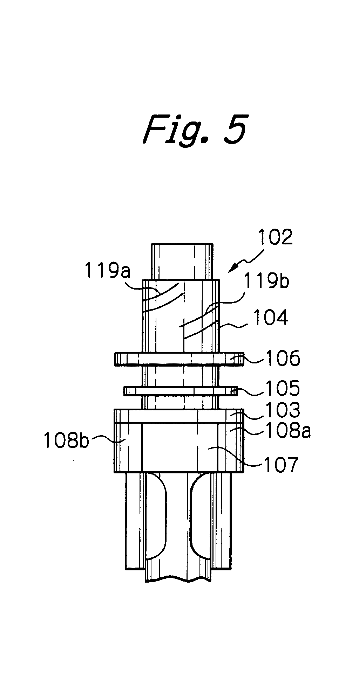

In this embodiment, as shown in Fig. 5, two identical threads are provided on the outer periphery of the mouth portion 104 of the spout 102 fitted to the bag 100. In this embodiment, the two threads are double threads 119a and 119b, which are cut in the same direction on the left and right halves of the spout mouth portion 104 divided by a plane perpendicular to the plane of the figure at the center in the horizontal direction. The cap 111 also has two identical internal threads (not shown) cut in correspondence to the double threads 119a and 119b. Accordingly, the cap 111 can be fitted to the spout 102 in either of two positions 180 degrees different from each other in the circumferential direction. In conformity to this arrangement, the above-described mark 116 is formed at each of two positions of the same height that are 180 degrees apart from each other in the circumferential direction. That is, two marks 116 are provided in this embodiment. Although two threads 119a and 119b are provided on the outer periphery of the spout mouth portion 104 in this embodiment, the number of threads may be one. In such a case also, positioning of the spout 102 in the rotational direction at the time of fitting it to the bag body 101 is effected by a cylindrical portion 107 (shown in Fig. 5) below the positioning flange 103 and thin plate-shaped sideward extending portions 108a and 108b, which extend sideward from the cylindrical portion 107 as shown in Fig. 5. Therefore, the spout 102 can be fitted to the bag body 101 in either of two positions 180 degrees apart from each other in the circumferential direction. Accordingly, in this case also, two marks 116 should preferably be formed 180 degrees apart from each other in the circumferential.direction.

Referring to Fig. 4 again, the camera 52 is connected to a controller 54. In response to an instruction from the controller 54, the camera 52 captures an image containing the whole of the cap 111 located in front of it and delivers the image to the controller 54. Inspection gates each having a predetermined configuration have been set in the controller 54. The inspection gates are used by being superimposed on the captured image. In this embodiment, the gates include a first inspection gate 55 (Fig. lb) set in the form of a horizontally elongated rectangle having a predetermined height and a predetermined width so that when the cap 111 is normally installed on the spout 102, the above-described mark is completely within the first inspection gate 55. In addition, a pair of second inspection gates 56a and 56b are provided so that when the cap 111 is normally installed on the spout 102, the second inspection gates 56a and 56b are located at bilaterally symmetric positions near the left and right upper end portions of the cap 111. As illustrated in the figure, the gates 56a and 56b are vertically elongated rectangles of the same size, which extend from a position a predetermined distance below the upper end edge 118 of the cap 111 to a position a predetermined distance above the upper end edge 118 so that a portion in the vicinity of the upper end edge 118 of the cap 111 is located within each of the gates 56a and 56b. Further, a third inspection gate 57 is set so as to surround the area between the lower edge 114a of the ring 114 of the cap 111 as installed correctly and the upper edge 106a of the upper flange 106 of the spout 102. It should be noted, however, that where the third inspection gate 57 is set is not necessarily limited to the above-described position. For example, the third inspection gate 57 may be set slightly above the described position so that the lower portion of the ring 114 as installed in a normal position slightly enters the gate 57. Alternatively, the position of the third inspection gate 57 may be further shifted upwardly so that the upper portion of the ring 114 in a normal position enters the gate 57. In other words, the third inspection gate 57 may be set at any position as long as a difference between the ring 114 as installed in a normal position and the ring 114 that is not in a normal position can be detected in the form of a change in the image of a portion of the ring 114 that is within the gate 57.

A defective range setting device 58 presets reference values for judging whether the cap installation condition is good or not. The controller 54 divides the inside of each of the first, second and third inspection gates 55, 56a, 56b and 57 into pixels with a predetermined size, which is set by the defective range setting device 58. Further, the controller 54 calculates the number of pixels in each gate as follows. Regarding the first inspection gate 55, the controller 54 calculates the number "m" of pixels superimposed on the image of the mark 116. For the second inspection gates 56a and 56b, the controller 54 calculates the numbers "p1" and "p2" of pixels superimposed on the image of a portion of the cap 111 below the upper end edge 118. With respect to the third inspection gate 57, the controller 54 calculates the number "n" of pixels superimposed on the image of the ring 114. Regarding a pixel that is not entirely superimposed on the associated image, it is judged that this pixel is superimposed on the image when the ratio of the area of the superimposed portion to the overall area of the pixel exceeds a certain value, e.g. 70%. A quality judging device 59 compares the results "m", "p1", "p2" and "n" of calculation performed by the controller 54 with the reference values preset by the defective range setting device 58 to judge whether the cap installation condition is good or not.

A counter 60 counts the number of signals each outputted from the controller 54 every time the installation condition of the cap 111 is judged to be good or not. An abnormality judging device 61 compares the result of counting by the counter 60 with a preset condition to judge abnormality of the tightening device 28. If the tightening device 28 is judged to be under abnormal conditions, the abnormality judging device 61 activates an alarm device 62. The controller 54 also delivers a signal to a sorter 63 for sorting defective and non-defective bags from each other. If the bag 100 under inspection is judged to be non-defective, the sorter 63 discharges the bag 100 onto a non-defective bag conveyor. If the bag 100 under inspection is judged to be defective, the sorter 63 discharges the bag 100 onto a defective bag conveyor.

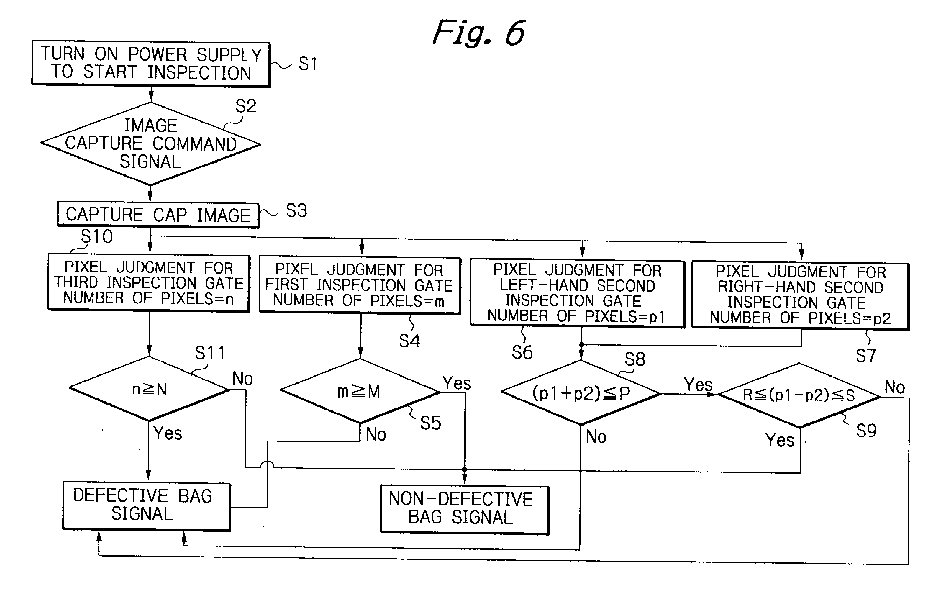

Fig. 6 is a flowchart of an inspection process performed by the inspection apparatus 51 in this embodiment. At step S1, the power supply is turned on to start inspection. At step S2, the controller 54 outputs a command signal to capture an image of the cap 111. At step S3, an image containing the whole of the cap 111 is captured as a plane image by the camera 52. The captured image is sent to the controller 54 where it is subjected to processing, e.g. enlargement, according to need. The controller 54 superimposes the above-described inspection gates 55, 56a, 56b and 57 on the cap image and calculates the numbers "m", "p1", "p2" and "n" of pixels superimposed on the image. More specifically, at step S4, pixel judgment is performed with regard to the image in the first inspection gate 55 to calculate the number "m" of pixels superimposed on the image. At step S5, a comparison is made between the number "m" of pixels and the reference value "M" for judgment, and a non-defective bag signal or a defective bag signal is outputted according to the result of the judgment. In other words, the fact that the number "m" of pixels is greater than the reference value "M" shows that the mark 116 is within an allowable range from the reference position with respect to the spout 102 in the circumferential or rotational angle direction thereof. In this case, a non-defective bag signal is outputted. The fact that the number "m" of pixels is smaller than the reference value "M" shows that the cap 111 is at a position beyond the allowable range with respect to the spout 102 in the rotational direction. In this case, a defective bag signal is outputted.

At step S6, pixel judgment is performed for the left-hand gate 56a of the second inspection gates to calculate the number "p1" of pixels. At step S7, pixel judgment is performed for the right-hand gate 56b to calculate the number "p2" of pixels. At step S8, a comparison is made between the sum of "p1" and "p2" and the reference value "P". The fact that the sum of "p1" and "p2" exceeds the reference value "P" shows that the upper end edge 118 of the cap 111 is above the correct position beyond the allowable range. In such a case, even if the mark 116 is within a predetermined allowable range in the rotational direction, the amount of tightening applied to the cap 111 is insufficient. In this case, a defective bag signal is outputted; otherwise a non-defective bag signal is outputted. Next, it is judged at step S9 whether or not a numerical value obtained by subtracting "p2" from "p1" is within an allowable range between the reference values "R" and "S". The fact that the numerical value exceeds the allowable range shows that the cap 111 is tilted with respect to the spout 102 in excess of an allowable limit value. In such a case, a defective bag signal is outputted. If the numerical value is within the allowable range, a non-defective bag signal is outputted.

Next, at step S10, pixel judgment is performed for the third inspection gate 57 to calculate the number "n" of pixels. Then, the number "n" of pixels is compared with the reference value "N" at step S11. The fact that the number "n" of pixels exceeds the reference value "N" shows that the ring 114 is below the normal position beyond an allowable limit value. This indicates the probability that some of the connecting portions 113 may be disconnected. In this case, a defective bag signal is outputted; otherwise a non-defective bag signal is outputted. Only when all the numbers "m", "p1", "p2" and "n" of pixels satisfy predetermined conditions, the bag 100 under inspection is judged to be non-defective.

As has been stated above, in the foregoing embodiment the whole cap 111 is imaged with the camera 52, and first, second and third inspection gates 55, 56a, 56b and 57 are set in correspondence to inspective object portions of the cap 111 that are to be inspected, i.e. the mark 116 formed on the outer peripheral surface 115 of the cap 111, two portions at bilaterally symmetric positions near the left and right upper end portions of the cap 111, and a portion of the ring 114. The image within each gate is subjected to image processing to obtain data for judgment, and the data thus obtained is compared with a reference value. Accordingly, it is possible to simultaneously make all judgments on the cap installation condition, i.e. a judgment as to whether the amount of tightening applied to the cap 111 is appropriate or not, a judgment as to whether the cap height is appropriate or not, a judgment as to whether or not the cap 111 is undesirably tilted, a judgment as to whether the ring 114 is present or not, and a judgment as to whether or not the connecting portions 113 are disconnected. Thus, the inspection for the cap installation condition can be performed by a single process.

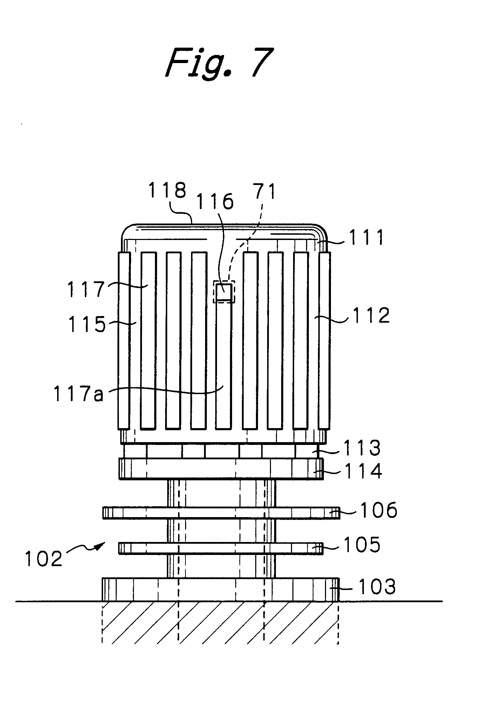

Fig. 7 is a diagram showing the relationship between a cap and an inspection gate set in an inspection method according to a second embodiment of the present invention. The cap is the same as that used in the first embodiment. Various portions of the cap are denoted by the same reference numerals as those used in the first embodiment. In contrast to the first embodiment, in which a plurality of inspection gates are used, the second embodiment uses only one inspection gate 71 that is set in correspondence to the mark 116 formed on the cap 111. In the first embodiment, the first inspection gate 55 is larger than the mark 116 in both the vertical and horizontal directions, whereas in the second embodiment, the inspection gate 71 has the same shape as the outer shape of the mark 116 as seen on a vertical plane or a configuration larger than the mark 116 by minimal quantities in both the vertical and horizontal directions. By setting such an inspection gate 71 that can be regarded as substantially identical in configuration with the mark 116 as an inspective object portion, it is possible to perform an inspection for the tightening torque, height and tilt of the cap 111 and to judge whether the cap installation condition is good or not. With this embodiment, it is difficult to make a judgment as to whether or not the ring 114 is present or whether or not the connecting portions 113 are disconnected. However, the inspection method of this embodiment is effective in a case where the cap 111 is not equipped with a ring 114, or in a case where a judgment on the ring 114 can be made separately.

In the first embodiment, a plurality of inspective object portions and a plurality of inspection gates corresponding thereto are provided. However, the inspective object portions and the inspection gates are not necessarily limited to those described above. To judge whether or not the cap 111 is present, a relatively large inspection gate may be set at a position corresponding to the cap body 112. Regarding the ring 114, an inspection gate for making a judgment on the presence or absence of the ring 114 may be provided at a position corresponding to the ring 114, and a gate for judging whether or not the ring 114 has dropped may be provided below the inspection gate.

As will be clear from the foregoing description, according to the present invention, an inspection gate with an appropriate configuration is provided in correspondence to a preselected inspective object portion of a cap, and the image of the inspective object portion within the gate is subjected to image processing. Inspection data obtained by the image processing is compared with a preset reference value. Accordingly, whether the cap installation condition is good or not can be judged extremely easily. In particular, it is possible to obtain all data necessary for the judgment as to whether the cap installation condition is good or not by a single image capturing operation. Therefore, the inspection method according to the present invention is extremely superior in operating efficiency.

It should be noted that the present invention is not limited to the foregoing embodiments but can be modified in a variety of ways.

## Claims

1. A cap installation condition inspection method for use in a bag filling and packaging process using a spouted packaging bag, said inspection method comprising the steps of:
forming a mark on an outer peripheral surface of a cap to be installed onto a spout, said mark serving as an object of detection;
providing imaging means for imaging said cap as installed on a bag held at a predetermined position with respect to said imaging means;
imaging said cap with said imaging means to obtain a vertical image of said cap;
setting a first inspection gate with a predetermined planar configuration at a position corresponding to a position of said mark when said cap is normally installed on said spout;
image-processing a portion of an image of said mark taken by said imaging means that is present within said first inspection gate to obtain first data for judgment; and
comparing said first data for judgment with a preset criterion for judgment to judge whether an installation condition of said cap is good or not.

2. An inspection method according to claim 1, wherein said mark is provided at each of two positions on the outer peripheral surface of said cap that are of a same height and 180 degrees apart from each other in a circumferential direction.

3. An inspection method according to claim 1 or 2, further comprising the steps of:
providing a pair of second inspection gates of a same configuration at respective positions corresponding to bilaterally symmetric positions on said cap, said second inspection gates each having a predetermined width in a horizontal direction and extending from a predetermined position below an upper end edge of said cap to a predetermined position above said upper end edge when said cap is normally installed on said spout;
image-processing a portion of an image in a vicinity of the upper end edge of said cap imaged by said imaging means that is present within each of said second gates to obtain second data for judgment; and
comparing said second data for judgment with a preset second criterion for judgment to judge whether an installation condition of said cap is good or not.

4. An inspection method according to any one of claims 1 to 3, wherein said cap has a ring connected to a lower end thereof through a disconnectable connecting portion, said ring being engaged with an engagement portion formed on an outer periphery of said spout when said cap is normally installed on said spout to prevent said ring from becoming dislodged;
said inspection method further comprising the steps of:
providing a third inspection gate in correspondence to said ring, said third inspection gate being set so that a portion of an image of said ring taken by said imaging means that is present within said third inspection gate changes in configuration if said ring moves relative to said cap in a state where said cap has been installed on said spout;
image-processing the portion of said image within said third inspection gate to obtain third data for judgment; and
comparing said third data for judgment with a preset third criterion for judgment to judge whether an installation condition of said cap is good or not.

5. An inspection method according to any one of claims 1 to 4, wherein said imaging means is provided singly.

6. A cap installation condition inspection method for use in a bag filling and packaging process using a spouted packaging bag, said inspection method comprising the steps of:
setting inspection gates of predetermined dimensions in a single plane in correspondence to a plurality of preset inspective object portions, respectively, of a cap;
holding a bag fitted with said cap at a predetermined position with respect to imaging means and imaging said cap with said imaging means to obtain an image of said cap;
image-processing images of said inspective object portions that are present within said inspection gates to obtain data for judgment; and
comparing said data for judgment with preset criteria for judgment to judge whether an installation condition of said cap is good or not.
